# EUROPEAN PATENT SPECIFICATION

(11) **EP 2 263 943 B1**
(45) Date of publication and mention of the grant of the patent: **02.05.2012**
(21) Application number: 09380119.9
(22) Date of filing: 16.06.2009
(51) Int. Cl.: B65B 69/00, B65G 47/252, B65G 65/23

(54) **Tray overturning device**
Umkehrvorrichtung für Schalen
Dispositif de retournement de plateaux

(43) Date of publication of application: 22.12.2010
(73) Proprietor: COFARES, Sociedad Cooperativa Farmacéutica Espanola, 28049 Madrid (ES); HEBER S.L., 28970 Humanes Madrid (ES)
(72) Inventor: Gomez Blanco, Jesus Angel, 28049 Madrid (ES); Bernabeu Avila, Juan Antonio, 28970 Humanes Madrid (ES)
(74) Representative: Vicario Cubillo, Marcos

(56) References cited:
- DE-A1- 4 116 183
- FR-A- 2 829 477
- GB-A- 710 251
- GB-A- 900 058
- GB-A- 1 435 091

## Description

### PURPOSE OF THE INVENTION

This invention refers to a device that has been conceived especially to overturn trays, of the kind used in product distribution lines of very diverse types, in which, once the useful contents are extracted from them, they are returned to the distribution line to be used again, with it being necessary to empty the waste such as paper, rubber, straps, plastics or similar that may have stayed in the trays once their useful content has been extracted.

The purpose of the invention is to provide an overturning device with a high degree of efficiency in emptying its content, with structuring that allows continuous working, without the need to have to stop the feeding process of the trays to the device until the preceding tray has been emptied and ejected.

### BACKGROUND OF THE INVENTION

As it is well known, in the preferred area of application of the invention, as well as in other areas, the distribution lines in factories in which the products, such as boxes of medicine and similar, are placed in trays, appropriately identified by means of bar codes or any other technology, so that by the conveyor belts, roller chains and similar, and the corresponding sensors and readers, the products are classified and distributed, according to the logistics of each case.

As a logical result, once the products are extracted from the trays, the latter are reused indefinitely, for which, and due to the generation of waste in them, such as scraps of papers, cardboard, dirt, etc., these trays need to be processed so that they present an acceptable level of cleanliness.

In this regard, the used trays are stacked and transported to a tray processing line, in which a separating machine is set up that puts the trays on a conveyor belt of the same type as used in the overturning machine, which hooks onto the trays, either lengthwise or crosswise, and turns them over a discard bin, in order to then return them to their initial position on the transport line.

This type of machine presents a problem, which is basically focused on the follow aspects:
- Turning the trays over does not achieve as effective an emptying as in the case in which these trays were turned over and thumped, since the papers, due to static electricity, tend to adhere to the walls of the tray, not being released on many occasions.
- This type of machinery is complex, and consequently costly.
- The overturning process is conditioned by the process of separating the trays, so that the chain continually has to be stopping, in such a way that until the overturning machine has finished its work, the separator does not proceed to separate a new tray, producing unproductive dead time.

Although other solutions are known, (e.g. GB 900 058), or such as tray conveyor belts in which they are conveniently held during their transport, and in which this chain describes a route in which the direction of its opening changes position in order to dump onto an emptying ramp, and again adapt its initial position; this solution presents the same inconveniences as described earlier, to which must be added the structural complexity of the chain itself and the space it takes up, given the special configuration that it must present, as well as the means of holding the trays during their transport, which makes the installation noticeably more expensive.

### DESCRIPTION OF THE INVENTION

The tray overturning device that the invention proposes solves the problems mentioned earlier in a fully satisfactory way by allowing the overturning machine to feed continually, thumping the overturning trays, which facilitates the elimination of the waste contained in them.

To achieve this, more specifically the overturning device of the invention starts from a chassis or a table of a height the same as the height of the line through which this machine is fed; this table has four pairs of transport belts defined for the trays, driven by geared motor groups, defining four consecutive sections.

The first sector consists of a horizontal section, a continuation of the feeding line that reaches the machine; after which comes a second sector, correspondingly slanted upwards whose end has an overturning support connected between the two belts, with an L-shaped configuration, which while not in operation its longer arm lies parallel to the belts, receiving the corresponding tray, so that this reception is detected by means of photoelectric sensor that activates the switch of a geared motor group that makes the overturning support rotate, so that the tray falls by gravity in an inverted position, that is, with the opening downwards, towards the third sector, located below and also slanted, positioning under the corresponding belts a bin for receiving the contents of the tray; this tray, falling by gravity, thumps the aforementioned lateral belts, facilitating the emptying process of the tray.

In a way similar to the previous section, the tray will be moved through the third sector, slanted until it reaches the end, where there is a second overturning support, similar to the previous one, but with a greater length, as the opening of the tray is larger than its base, which as in the previous case will proceed to overturn the tray, which will fall by gravity to the fourth sector defined by the conveyor belts, placed under the previous one, horizontal, with a height corresponding to the reception line of the empty trays.

It can be highlighted that the machine described will incorporate a series of sensors through which the geared motor groups that operate the different belts as well as the overturning supports are activated/deactivated, so that it impedes the overturning of a tray if another tray is situated in the area provided for it to fall.

### DESCRIPTION OF THE DRAWINGS

In order to complement the description that is being made and for the purpose of helping to understand better the characteristics of the invention, in accordance with a preferred example of its practical realisation, a set of drawings are attached as an integral part of this description in which the following has been presented as an example but it is not limited to it:

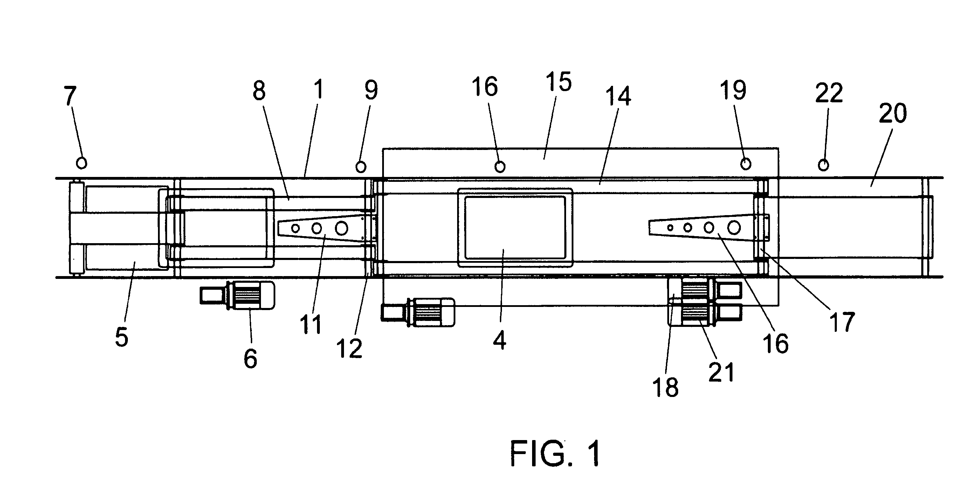

Figure 1. It shows a layout of a tray overturning machine in accordance with the purpose of this invention.
Figures 2 and 3. They show, according to their respective side views, the layout of Figure 1 in different working positions.

### PREFERRED REALISATION OF THE INVENTION

In view of the figures indicated, one can observe how the device that is proposed is made up of a table or chassis (1), supported by legs (2) on the floor, as well as means of regulating (3) these legs, a table that will be at the same height as the line of rollers or conveyor belt through which this machine is fed the trays (4) to be emptied.

In the aforementioned table (1) a first initial section is defined, horizontal, in which there are conveyor belts (5) driven by a geared motor group (6).

When a tray (4) enters the machine, this functioning is carried out completely automatically by means of a photoelectric sensor (7) that detects the trays.

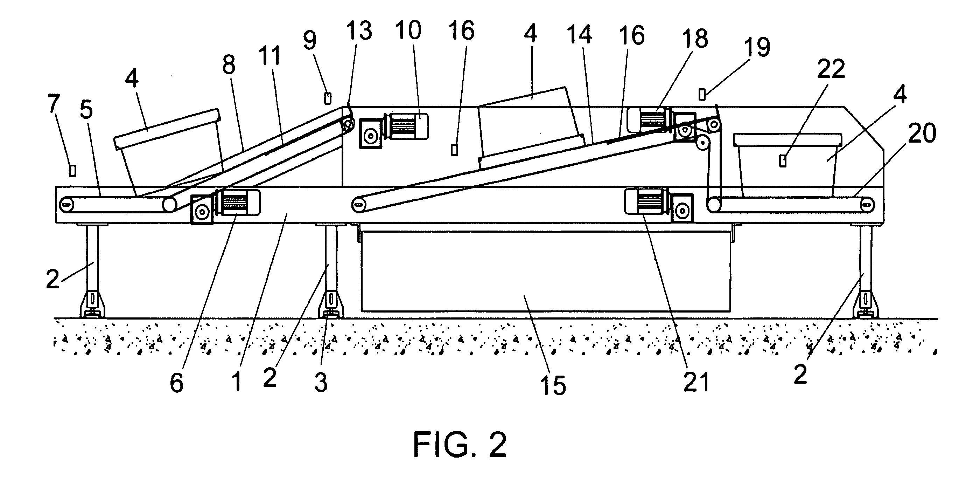

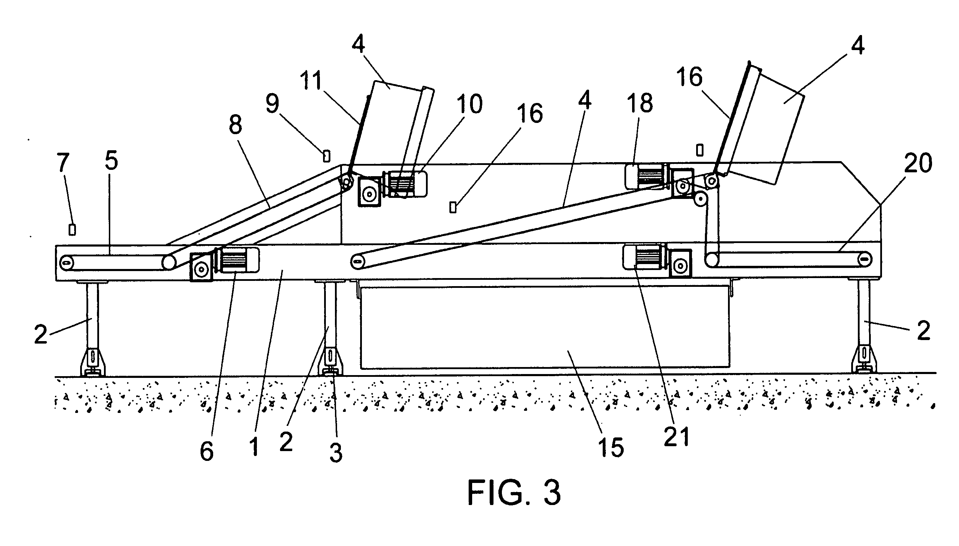

At the end of the conveyor belt (5), there is another pair of belts (8), also driven by the geared motor group (6), which are slanted, in order to provide the elevation of the tray that facilitates its turning over, for which purpose, at the end of the outlet of this pair of belts (8) there is a photoelectric sensor (9) that detects the presence of a tray (4), and that activates a geared motor group (10) that makes an overturning support (11) rotate around 90°, associated to a rotating axis (12), so that this support is placed between the two belts (8), slightly below these and parallel to them, as shown in Figure 2, materialised in an L-shaped element, whose shorter arm (13) acts as a position limit of the tray in this support while its longer arm will be of a considerably greater length, in order to lie on the smaller base of the tray, a position in which the activation of the geared motor group (10) is carried out, and consequently the overturning of this support, up to the limit position, shown in figure 3, in which the tray by the simple effect of gravity, falls on a third pair of conveyor belts (14) in the overturned position, so that in this overturning manoeuvre the tray thumps against these conveyor belts (14), optimising the manoeuvre to empty the waste that will fall through the space between the pair of conveyor belts towards a collector bin (15).

The pair of conveyor belts (14) will also have a slanted position, with a photoelectric sensor (16) in its initial section that detects the presence of trays in the area, so that in this case the functioning of the geared motor group (10 and 6) will be turned off, in order to avoid a tray falling on the previous tray.

The tray (4) is moved by means of the conveyor belts (14) in the inverted position, until it reaches a certain point where a second overturning support (16) is connected, with similar characteristics and functioning as the overturning support (11), although slightly longer as it receives the trays in the inverted position; the support is associated to a rotating axis (17) and driven by means of a geared motor group (18), after detecting that the tray is in the end position by means of a photoelectric sensor (19).

The overturning support (16) turns the trays (4) over onto a fourth set of conveyor belts (20), so that they remain with their opening upwards; these belts are horizontal and positioned at the height of the reception line of the empty trays, with the pair of conveyor belts (20) and (14) driven by a geared motor group.

Finally, it only remains to be pointed out that as in the previous overturning process, in the falling area of the trays corresponding to the conveyor belts (20) there is a photoelectric sensor (22) that interrupts the functioning of the geared motor group (18) when the presence of a tray is detected, avoiding the falling of the next tray on this one.

## Claims

1. Device for turning over trays (4), of the type used in product distribution lines, in which, once the useful content is extracted from them, they are returned to the distribution line to be used again after being emptied of possible waste contained in them, **characterised by** being constituted of a table or chassis (1), in which four pairs of conveyor belts (5, 8, 14, 20) are established for the containers (4), driven by geared motor units (6,21), defining four consecutive sectors: a first sector that has a horizontal position; a second sector, continuing from the first one and slouted in an upwards direction; a third sector also upwardly slouted with its first portion under the previous sector, and a fourth and last sector, horizontal, also placed under the third sector; the back ends of the conveyor belts (8,14) that define the slouted sectors each provided with over turning supports (11,16), presenting an "L"-shaped profile configuration, with the larger arm noticeably longer than the shorter arm (13) acting as the limiting end of the container's position, and that in the non-operating position they are parallel to the conveyor belts (8,14), having the means to rotate and tip the containers over onto the next sector defined by the conveyor belts associated with respective geared motor units (10,18), with the particularity that underneath the pair of belts (15) of the third sector on which the container falls by gravity in an inverted position a collection bin (15) is established for the possible waste contained in the container.

2. Container tipping device, according to claim 1, **characterised by** providing, along the four sectors that define the conveyor belt (5, 8, 14, 20) for the trays (4), photoelectric sensors (7, 9, 16, 19, 22) to activate/stop the geared motor units (6, 21), as well as the start/stop of the geared motor units that activate the over turning supports (11-16).

3. Container tipping device, according to claim 1, **characterised by** the table or frame (1), incorporating support legs (2) on the floor, equipped with means to adjust (3) their height.

## Patentansprüche

1. Einrichtung für das Umkippen von Tabletts (4), der Art, wie sie in Verteilungsreihen zum Einsatz kommen, bei denen, sobald der verwendbare Inhalt entfernt wurde, diese zur Verteilungsreihe zurückgeführt werden, um nach dem Entfernen von möglichen, auf ihnen befindlichen Rückständen, wiederverwendet zu werden, **dadurch gekennzeichnet, dass** diese einen Tisch oder ein Gestell (1) enthält, auf dem vier Paare von Förderbändern (5, 8, 14, 20) für die Transportbehältnisse (4) eingerichtet wurden, welche von Triebwerkmotorgruppen (6, 21) angetrieben werden, die vier aufeinanderfolgende Bereiche genau bezeichnen. Der erste Bereich besitzt eine waagerechte Stellung, der zweite Bereich ist eine Weiterführung des ersten und neigt sich aufwärts, ein dritter, ebenfalls aufwärtsführender Bereich, neigt sich mit seinem ersten Teil unter den vorherigen Bereich und ein vierter und letzter, waagerechter Bereich, der ebenfalls unter dem dritten Bereich platziert ist. Die rückwärtigen Enden der Förderbänder (8, 14), die die geneigten Bereiche abgrenzen, sind jeweils mit Kipphalterungen (11, 16) ausgerüstet und weisen eine L-förmige Profilanordnung auf, wobei der längere Arm bedeutend länger als der kürzere Arm (13) ist, der als begrenzender Abschluss für die Stellung der Behältnisse fungiert. Befinden sich diese nicht in Betrieb, sind sie parallel zu den Förderbändern (8, 14) ausgerichtet. Sie sind mit den Mitteln ausgestattet, die ein Drehen und ein Umkippen der Behältnisse in den nächsten Bereich ermöglichen, der durch die Förderbänder **gekennzeichnet** ist, die an die entsprechenden Triebwerkmotorgruppen (10, 18) angeschlossen sind. Dieser Bereich besitzt die Besonderheit, dass unter einem Paar Förderbänder (15) im dritten Bereich, in dem das Transportbehältnis aufgrund der Schwerkraft in die umgekehrte Stellung fällt, ein Abfallbehälter (15) für evtl. Rückstände, die sich im Transportbehältnis befinden können, aufgestellt ist.

2. Transportbehältnis mit Umkippvorrichtung, gemäß dem ersten Patentanspruch, **dadurch gekennzeichnet, dass** es entlang der vier Bereiche, die das Förderband (5, 8, 14, 20) für die Tabletts (4), die photoelektrischen Sensoren (7, 9, 16, 19, 22) für das Einschalten/Anhalten der Triebwerkmotorgruppen (6, 21) sowie für das Einschalten/Anhalten der, die Kipphalterungen (11, 16) betätigenden Triebwerkmotorgruppen, ausmachen, ausgestattet ist.

3. Transportbehältnis mit Umkippvorrichtung, gemäß dem ersten Patentanspruch, **dadurch gekennzeichnet, dass** es aus einem Tisch oder Gestell (1) besteht, in das auf dem Boden befindliche Stützfüße (2) eingelassen sind, die mit Mitteln für die Höhenjustierung (3) ausgerüstet ist.

## Revendications

1. Dispositif pour retourner des bacs (4), du type utilisé dans les lignes de distribution de produit, dans lequel, une fois que le contenu utile est extrait de ces bacs, ces derniers retournent à la ligne de distribution pour être de nouveau utilisés après avoir été vidés des déchets potentiels qu'ils contiennent, **caractérisé en ce qu'**il est constitué d'une table ou d'un châssis (1), dans lequel quatre paires de courroies transporteuses (5,8,14,20) sont mises en place pour les conteneurs (4), actionnées par des unités motoréductrices (6,21), définissant quatre secteurs consécutifs; un premier secteur qui a une position horizontale ; un deuxième secteur, en continuation du premier et incliné dans une direction vers le haut ; un troisième secteur également vers le haut, incliné avec sa première portion, sous le secteur précédent, et un quatrième et dernier secteur, horizontal, également placé sous le troisième secteur; les extrémités arrières des courroies transporteuses (8,14) qui définissent les secteurs inclinés chacun doté de supports de retournement (11,16), présentant une configuration de profil en forme de « L », avec le bras le plus grand nettement plus long que le bras le plus petit (13) agissant comme l'extrémité de limitation de la position du conteneur, et qui dans la position de non-exploitation sont parallèles aux courroies transporteuses (8,14), ayant les moyens pour tourner et renverser les conteneurs sur le secteur suivant défini par les courroies transporteuses associées avec les unités motoréductrices (10,18) respectives, avec la particularité que sous la paire de courroies (15) du troisième secteur sur lequel le conteneur tombe par la gravité dans une position inversée un bac de collecte (15) est mis en place pour les déchets potentiels dans le conteneur.

2. Dispositif de basculement de conteneur, selon la revendication 1, **caractérisé en ce qu'**il est doté, le long des quatre secteurs qui définissent la courroie transporteuse (5,8,14,20) pour les bacs (4), des capteurs photoélectriques (7,9,16,19,22) pour actionner/arrêter les unités motoréductrices (6,21) ainsi que l'actionnement/l'arrêt des unités motoréductrices qui actionnent les supports de retournement (11,16).

3. Dispositif de basculement de conteneur, selon la revendication 1, **caractérisé en ce que** la table ou châssis (1) contiennent des pieds de support (2) sur le sol, équipés de moyens pour ajuster (3) leur hauteur.
